# EUROPEAN PATENT APPLICATION

(11) **EP 1 013 947 A1**
(43) Date of publication of application: **28.06.2000**
(21) Application number: 99122645.7
(22) Date of filing: 13.11.1999
(51) Int. Cl.: F16B 39/36

(54) **Fastener device**

(30) Priority: 16.12.1998 DE 29822392 U
(71) Applicant: ITW Automotive Products GmbH & Co. KG, 58842 Iserlohn (DE)
(72) Inventor: Jakob, Andreas, 58675 Hemer (DE); Kappel, Hubert, 58636 Iserlohn (DE)
(74) Representative: Patentanwälte Hauck, Graalfs, Wehnert, Döring, Siemons

(57) **Abstract**

A fastener device for the fastening of a part to a threaded bolt (16), said device having a member (2) with a bore (4) having a threaded portion for the connection with the threaded bolt (16), wherein
- said bore (4) includes a circumferentially extending groove (6), the bottom wall of the groove (6) being cone-shaped and coaxial with said bore (4),
- a ring (8) is located in said groove (6), said ring (8) being dimensioned such that it encircles said threaded bolt (16) and can be axially displaced in direction of the taper of the conical surface, with the outer surface of said ring (8) engaging and cooperating with said cone-shaped bottom wall surface (10), said ring (8) being structured such that the diameter of said ring can be varied,
- said ring comprises a coupling means (12) which cooperates with a stop for the displacement of said ring on said threaded bolt (16) or on said part to be fastened.

## Description

The invention refers to a fastener device e. g. for the fastening of a part to a support structure.

In order to fasten a structural part to a threaded bolt fastener devices having a threaded bore are known, with the shape of the bore varying in dependence of the individual application. Extremely versatile usable fastener devices include nuts. Usually, they are used either to fasten structural parts against a shoulder on the threaded bore or to form a fixed stop on the threaded bolt.

The fastening effect is a result of an elastic extension of the threaded bolt which is lengthened upon a tightening of the nut in order to clamp the fastening device and the structural part against each other. The thread of the nut is pressed against the thread of the threaded bolt so that the nut is held in place by friction. The friction increases with the torque by which the nut is tightened. Thus, the safety against loosening, e. g. upon vibrations of the structural part increases correspondingly.

In some application cases it is not allowed to tighten the nut beyond a predetermined torque. On the other side high safety against undesired loosening is to be achieved.

For a solution of this problem it is known to form a plastic ring into the threads of the nut so. The usually smooth inner contour of the ring first has a diameter which is somewhat larger than the core diameter of the threaded bolt onto which the nut is to be threaded. When the nut is threaded onto the bolt the inner contour of the ring is deformed plastically in that the threads of the threaded bolts penetrate into the material of the ring. This results in a resistance for the nut against turning on the threaded bolt and prevents the nut from being loosened.

Such a known nut has the following disadvantages: Upon tightening of the nut onto a threaded bolt the tightening requires a relatively high force and thus cannot be carried out manually. As such a nut provides a corresponding resistance against disassembling normally such a nut is only used for one time. Furthermore, the torque which is necessary for a preassembly of such a nut is not reproducible so that with nuts which are to be tightened by a predetermined torque it cannot be guaranteed that this torque is reproducibly attained. Furthermore, in some application cases the resistance of the nut against turning is too low so that such a connection may be unintentionally loosened.

With the invention a fastener device is provided which can be easily preassembled and which offers high safety against unintentional loosening.

The fastener device of the invention is defined by claim 1. Advantageous developments thereof are indicated in subclaims.

In the invention a joint member has a threaded bore to be threaded onto a threaded bolt. The member is preferably a nut. The bore including the threaded portion of the member has a circumferentially extending groove which accommodates a ring. The bottom wall of the groove and preferably also the outer surface of the ring is conical. The ring which engages the outer surface of the conical bottom surface of the groove is axially displaceable, i. e. in the direction of the tapering cone surface so that the diameter of the ring is changed upon an axial displacement. The variable diameter of the ring may be achieved by a slit which opens the ring or by a clamp shaped embodiment or by a plastic deformation. In order to displace the ring it has coupling means which cooperate with a stop on the threaded bolt or the structural part to be fastened. Preferably, the coupling means include a projection which axially protrudes beyond the bore of the member, e. g. a sleeve portion encircling the threaded bolt. Preferably, the stop means is formed by a surface extending radially outwardly from the threaded bolt, e. g. a body surface of a structural part to be fastened on the threaded bolt. If the member according to the invention including the projection is threaded against the body surface in order to achieve the usual fastening of the structural part on the threaded bolt such movement forces the projection into the bore and displaces the ring in the groove axially in direction of the tapered cone surface so that the diameter of the ring is reduced in that the outer surface of the ring is guided by the tapered conical groove surface. Thus, the inner diameter of the ring is decreased and the inner contour of the ring clampingly engages the threads of the threaded bolt in order to secure the fastening device on the threaded bolt against unintentional loosening.

With the invention a higher safety torque is achieved, i. e. a torque necessary to loosen the connection. Furthermore, the fastener member according to the invention can be preassembled manually without a larger force. The torque necessary for the tightening of the member is reproducible so that the predetermined torque can be achieved within tolerable limits. The fastener device according to the invention can be released so that it can be multiply applied without any problems.

For a clamping of the ring on the threads of the threaded bolt the inner contour of the ring according to the invention can have different shapes. The inner contour for example can be smooth so that the peaks of the threads are pressed into the inner wall of the ring if it consists of plastic material. The inner contour of the ring can be also thread like shaped and thus correspond to the thread of the threaded bolt so that a large pressing and friction surface is achieved.

A preferred embodiment of the invention is subsequently described along accompanying drawings.
- Fig. 1: shows a section through a fastener device according to the invention.
- Fig. 2: shows an explosion illustration of Fig. 1 and furthermore a plan view on a ring for the fastening device.
- Fig. 3: shows a lateral view on the fastening device partially in cross section including a threaded bolt prior to the tightening of the structural part.
- Fig. 4: shows a similar view as Fig. 3, however after the fastener device being tightened.

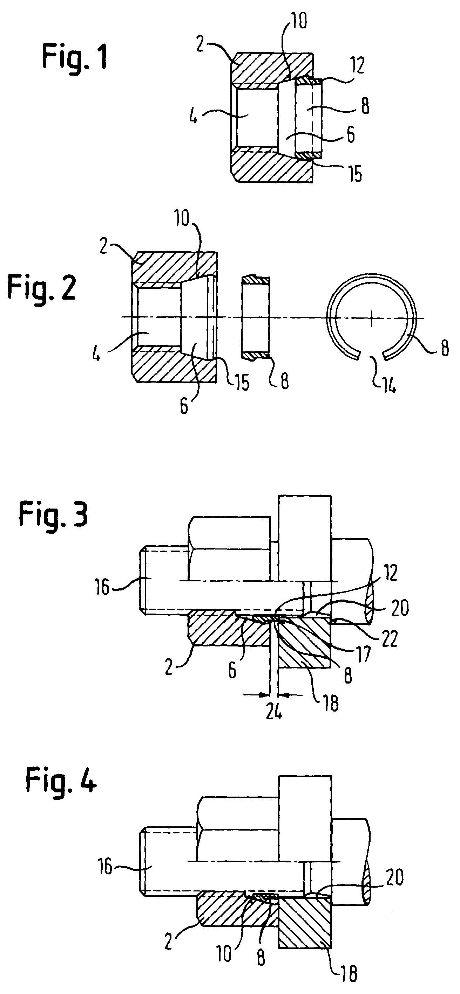

In Fig. 1 a nut 2 is shown having a through-going bore 4 with a threaded portion and an annular groove 6 which accommodates a ring 8. The bottom surface 10 of the groove is conical and coaxial with the bore 4. Groove 6 is located at one end of bore 4 and the conical groove bottom surface 10 tapers towards the threaded portion. Ring 8 has coupling means 12 in form of an annular projection which extends beyond bore 4 as a protruding edge around the circumference of the ring.

In Fig. 2 it can be seen that due to slot 14 in ring 8 the diameter of ring 8 can be changed. It can be further seen that the groove 6 in the end portion of bore 4 is restricted by a small shoulder 15 which extends radially inwardly and thus prevents the ring from dropping out. During preassembly ring 8 is somewhat radially inwardly pressed into and held in groove 6 under a small radial tension as shown in Fig. 1.

In Fig. 3 it can be seen that the inner diameter of the smooth inner contour of ring 8 is equal to the outer diameter of a threaded bolt 16. The inner diameter of the inner ring surface may be slightly larger than the outer diameter of the threads on the threaded bolt 16 so that the nut 2 can be easily threaded onto the threaded bore until it engages a surface 17 on a structural part 18 to be fastened. The nut 2 is threaded on bolt 16 in an orientation that the projecting edge 17 of ring 18 extends beyond bore 4 towards structural part 18. The structural part 18 includes a through-bore 20 for the extension of bolt 16 therethrough and engages a shoulder 22 on bolt 16. In this position part 18 can be fastened by nut 2.

It can be seen in Fig. 4 that ring 8 is displaced along the tapered conical groove surface 10 into nut 2 about a length 14 between nut 2 and part 16, i. e. about a length which corresponds to the length by which edge 12 protrudes beyond nut 2. Thus, the diameter of ring 8 is reduced. The threads of bolt 16 dig into the inner contour of ring 8 which in the example illustrated is made of plastically deformable synthetic material, while the outer circumference of the ring is of tempered steel. As can be seen the nut 2 is clamped on bolt 16 and secured against unintentional release.

The clamping force can be dimensioned by dimensioning the length 24 about which edge 12 of ring 8 protrudes beyond nut 2, by the diameter and the slope of the conical nut surface 10 as well as by the diameter of the inner contour of the ring. The clamping force is generated by the described pressing of the inner contour of the ring on bolt 16 if ring 16 is pressed into nut about the length 24.

As soon as the position of Fig. 4 has been achieved nut 2 engages the structural part 18 to be fastened while nut 2 is secured against unintentional release. A predetermined torque can be reproducibly applied since the torque which is necessary to achieve the clamping effect is also reproducible.

## Claims

1. A fastener device for the fastening of a part to a threaded bolt, said device having a member with a bore having a threaded portion for the connection with the threaded bolt, characterized in that
- said bore includes a circumferentially extending groove, the bottom wall of the groove being cone-shaped and coaxial with said bore,
- a ring is located in said groove, said ring being dimensioned such that it encircles said threaded bolt and can be axially displaced in direction of the taper of the conical surface, with the outer surface of said ring engaging and cooperating with said cone-shaped bottom wall surface, said ring being structured such that the diameter of said ring can be varied,
- said ring comprises a coupling means which cooperates with a stop for the displacement of said ring on said threaded bolt or on said part to be fastened.

2. The device of claim 1, wherein said member is a nut.

3. The device of claim 1 or 2, wherein the outer surface of said ring is cone-shaped corresponding to the surface of the bottom wall of the groove.

4. The device of claim 1, wherein the inner shape of said ring is a circular cylindrical surface having a diameter which is greater than or equal to the outer diameter of the threaded bolt.

5. The device of claim 1, wherein said ring consists of steel.

6. The device of claim 5, wherein the steel is heat-treated.

7. The device of claim 1, wherein at least the inner surface of said ring consists of a polymer.

8. The device of claim 7, wherein the inner shape of said ring comprises a plastically deformable surface.

9. The device of claim 1, wherein said ring is a slit for varying its diameter.

10. The device of claim 1, wherein said ring has a shape of a collet chuck

11. The device of claim 1, herein said ring is plastically deformable for varying its diameter.

12. The device of claim 1, wherein said groove is located in an end portion of the bore of said member with the cone-shaped surface of the groove tapering towards the threaded portion of the bore.

13. The device of claim 1, wherein the coupling means is defined by a projection of said ring which extends radially outwardly beyond said member.

14. The device of claim 13, wherein said projection is defined by an annular portion of said ring.

15. The device of claim 1, wherein the stop is defined by a surface of said bolt extending radially outwardly.

16. The device of claim 1, wherein the stop is defined by a surface of said part to be fastened on said threaded bolt.

17. The device of claim 1, wherein said stop is defined by a step-shaped enlargement of said threaded bolt.
